(19) Europäisches Patentamt
European Patent Office
Office européen des brevets

(11) Veröffentlichungsnummer: **0 439 791 B1**

(12) # EUROPÄISCHE PATENTSCHRIFT

(45) Veröffentlichungstag der Patentschrift: **25.10.95**

(51) Int. Cl.[6]: **C08K 5/42**, C08K 5/46, G02B 1/08, G02B 5/30

(21) Anmeldenummer: **90124863.3**

(22) Anmeldetag: **20.12.90**

Die Akte enthält technische Angaben, die nach dem Eingang der Anmeldung eingereicht wurden und die nicht in dieser Patentschrift enthalten sind.

(54) **Lichtpolarisierende Filme oder Folien enthaltend Triphendioxazin- bzw. Triphendithiazin-Farbstoffe.**

(30) Priorität: **10.01.90 DE 4000481**

(43) Veröffentlichungstag der Anmeldung:
**07.08.91 Patentblatt 91/32**

(45) Bekanntmachung des Hinweises auf die Patenterteilung:
**25.10.95 Patentblatt 95/43**

(84) Benannte Vertragsstaaten:
**DE FR GB IT**

(56) Entgegenhaltungen:
**EP-A- 0 001 267**
**EP-A- 0 348 964**

**WPIL, FILE SUPPLIER, Derwent Publications Ltd., London (GB); AN 87-17986 (03)**

(73) Patentinhaber: **BAYER AG**

**D-51368 Leverkusen (DE)**

(72) Erfinder: **Wild, Peter, Dr.**
**Droste-Hülshoff-Strasse 2**
**W-5068 Odenthal (DE)**
Erfinder: **Claussen, Uwe, Dr.**
**Am Wasserturm 15b**
**W-5090 Leverkusen 3 (DE)**
Erfinder: **Kröck, Friedrich Wilhelm, Dr.**
**Ackerstrasse 45**
**W-5068 Odenthal (DE)**

**EP 0 439 791 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft lichtpolarisierende Filme oder Folien enthaltend Triphendioxazin- bzw. Triphendithiazin-Farbstoffe.

Filme auf der Basis von Polyvinylalkohol, die Iod oder dichroitische Farbstoffe als polarisierende Agentien enthalten, sind bekannt.

Technische Verwendung haben bislang ganz überwiegend die iodhaltigen Polarisatoren gefunden, die beispielsweise in den passiven Flüssigkristall-Displays zur Sichtbarmachung der Information eingesetzt werden. Bei Abwesenheit von Feuchtigkeit kennzeichnen diese eine ausgezeichnete Lichtechtheit und hervorragende dichroitische Eigenschaften im langwelligen Bereich des sichtbaren Spektrums. Das wirksame Agens dieser Filme ist der Iod-Polyvinylalkohol-Komplex (M.M.Zwick, J. Appl. Polym. Sci.; 9, 2393-2424 (1965)), der das Tageslicht zwar breitbandig, aber nicht vollständig absorbiert.

Im kurzwelligen Bereich ist ein "Loch", d.h. ein Bereich verminderter Extinktion, weswegen die Folien eine blaue Eigenfarbe zeigen.

Dies hat nachteilige Folgen, wenn man weißes Licht erzeugen will. Das unpolarisiert durchgelassene Licht vermindert den Dichroismus und damit die Polarisationsleistung in diesem Bereich. Um ihn wieder anzuheben, ist man gezwungen, die Konzentration an Iod-Komplex zu erhöhen. Diese Korrektur im kurzwelligen Bereich zieht aber eine übermäßige Extinktion im langwelligen Bereich nach sich. Die Folge ist eine deutliche Verminderung des durchgelassenen Lichts in der Durchgangsstellung, verbunden mit einer Minderung der Helligkeit der Anzeige, die mit dieser Folie bestückt wird. Um zu vertretbaren Helligkeiten zu gelangen, muß man Kompromisse schließen.

Eine wichtige kritische Größe eines Displays ist die Ablesbarkeit bei verschiedenen Beleuchtungsverhältnissen; sie wird üblicherweise als "Perceived contrast ratio" (PCR = $T_I/T_{II}$ angegeben. Aus diesem folgt, daß die Transmission einerseits in der Sperrstellung ($T_{II}$) so klein wie möglich (Ablesbarkeit bei Dunkelheit), andererseits in der Durchgangsstellung ($T_I$) so groß wie möglich (Ablesbarkeit bei Helligkeit) gemacht werden muß. Dies erfordert eine ganz gleichmäßige Polarisationsleistung des Filters über den gesamten spektralen Bereich, welche mit der Iodfolie prinzipiell nicht erreicht werden kann.

Es hat nicht an Versuchen gefehlt, Iod durch Farbstofftripel dichroitischer Farbstoffe zu ersetzen, um ein Neutralgrau mit gleichmäßigem Dichroismus zu erzeugen.

Allerdings bedarf es hierzu einer Gamme sehr leistungsfähiger Farbstoffe. Sie müssen neben guten Licht- und Wetterechtheiten eine hohe Extinktion und einen hohen Dichroismus in der Matrix haben; außerdem dürfen sie keine Nebendichten mit geringerem Dichroismus besitzen. So sind vorzugsweise Polyazofarbstoffe vorgeschlagen worden, beispielsweise auf der Basis der 4-Nitro-4'-amino-flavonsäure (JA 59-145255, 60-156759, 60-168743) oder des substituierten Benzidins (JA 61 255 304). Daneben sind zahlreiche einzelne Direktfarbstoffe genannt worden, beispielsweise Direct Red 2, 31, 81, Direct Orange 26, 107, Direct Green 85, Direct Blue 1, 202, Direct Black 17, 19, Direct Yellow 12, 44 usw. (GB 20 23 301, JA 60-230 606, JA 60-159 705, EP 182 632). Die genannten Farbstoffe entstammen vorwiegend der Azoreihe. Daneben sind aber auch Farbstoffe der (einkernigen) Triphendioxazin-Reihe genannt worden, z.B. Direct Blue 106, 107, 109, 190 (JA 61-275 703), die aber nur einen mäßigen Dichroismus aufweisen. Obwohl der Dichroismus bei den Farbstoffen eine verbreitete Eigenschaft ist, (vgl. W. Hanle, H. Scherer, Zeitschr. Naturforsch. 6a, 437-439 (1951)) gelang es bisher nicht, die spektralen Eigenschaften der Iodfolie zu erreichen oder zu übertreffen. Dies ist einmal dem Fehlen guter Blaunuancen, zum anderen der Forderung nach dem hohen Dichroismus des Systems Farbstoff/Matrix zuzuschreiben.

Es wurde nun überraschenderweise gefunden, daß zweikernige Triphendioxazin- bzw. Triphendithiazinfarbstoffe hervorragende dichroitische Eigenschaften aufweisen und sich sehr gut zur Herstellung von lichtpolarisierenden Filmen oder Folien eignen.

(Eine im folgenden einmal gegebene Definition eines Restes oder Index wird im weiteren Text beibehalten).

Die Erfindung betrifft lichtpolarisierende Filme oder Folien enthaltend Farbstoffe, die in Form der freien Säure der Formel

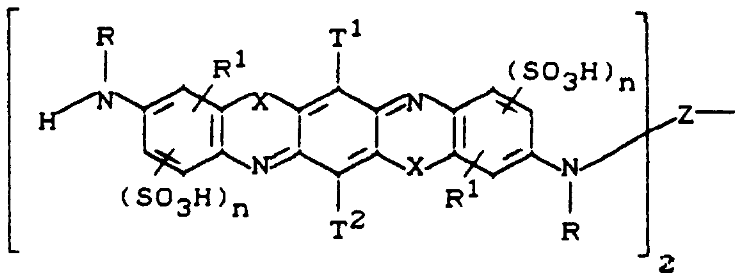

(I)

entsprechen, worin

R = H, gegebenenfalls substituiertes $C_1$-$C_4$-Alkyl, gegebenenfalls substituiertes Phenyl,
$R^1$ = H, Substituent
$T^1$, $T^2$ = H, Cl, Br, gegebenenfalls substituiertes $C_1$-$C_4$-Alkyl, $C_1$-$C_4$-Alkoxy, Phenyl, Phenoxy
n = 1, 2
Z = Brückenglied
X = Sauerstoff- oder Schwefel

bedeuten.

Beispiele für R sind: -H, $-CH_3$, $-C_2H_5$, n-$C_3H_7$, i-$C_3H_7$, n-$C_4H_9$, i-$C_4H_9$, die beispielsweise durch -OH, $-OCH_3$, $-OC_2H_5$, -COOH, $-SO_3H$, $-O-SO_3H$, -CN, -Cl substituiert sein können.

Geeignete Substituenten $R^1$ sind: $-CH_3$, $-C_2H_5$, -Cl, $-OCH_3$, $-OC_2H_5$, -COOH.

Substituenten der gegebenenfalls substituierten $C_1$-$C_4$-Alkyl- und $C_1$-$C_4$-Alkoxyreste $T^1$ bzw. $T^2$ sind beispielsweise: $-OCH_3$, $OC_2H_5$, $-O-SO_3H$.

Substituenten der gegebenenfalls substituierten Phenyl- und Phenoxyreste R, $T^1$ bzw. $T^2$ sind beispielsweise: -Cl, -Br, $-CH_3$, $-C_2H_5$, $-OCH_3$, $-OC_2H_5$.

Geeignete Brückenglieder Z sind beispielsweise -CO-sowie Reste von aliphatisch-konjugierten, aromatisch-carbocyclischen oder aromatisch-heterocyclischen Dicarbonsäuren, sowie der Cyanurchlorid-Rest.

Als Beispiele für Z seien genannt:

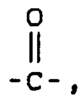 , 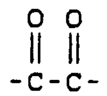 , 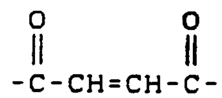 ,

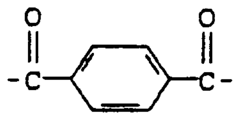 , 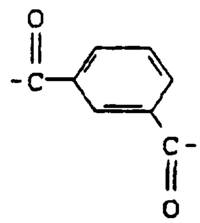 , 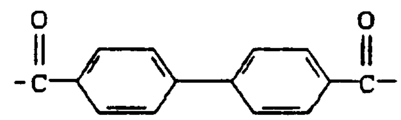 ,

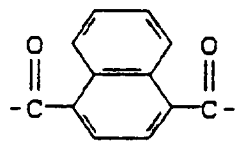 , 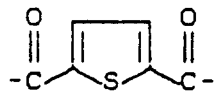 , 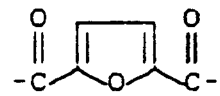 ,

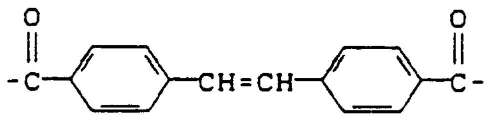 , 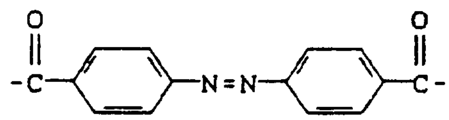 ,

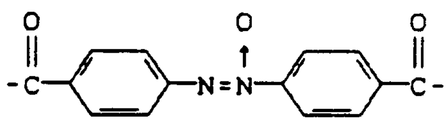 , 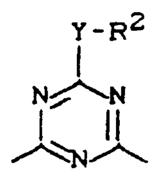

wobei

$R^2$ für einen Alkyl- oder Arylrest steht, der gegebenenfalls weiter substituiert sein kann (geeignete Alkylreste sind beispielsweise die für den Rest R genannten, geeignete Arylreste sind insbesondere durch Cl, Br, $CH_3$, $C_2H_5$, $OCH_3$, $OC_2H_5$- oder $SO_3H$ substituierte Phenylreste) und

Y O oder NH bedeutet.

Bevorzugte Farbstoffe sind solche mit X = O.

Besonders bevorzugt sind Farbstoffe der Formel (I), in denen

R = H,

$R^1$ = H,

$T^1$, $T^2$ = Cl,

n = 1

X = -O- ist und

Z = die oben angegebene Bedeutung hat, insbesondere solche, in denen Z = -CO-.

Die Farbstoffe der Formel I erhält man beispielsweise indem man einen Triphendioxazin- bzw. Triphendithiazin-Farbstoff der Formel

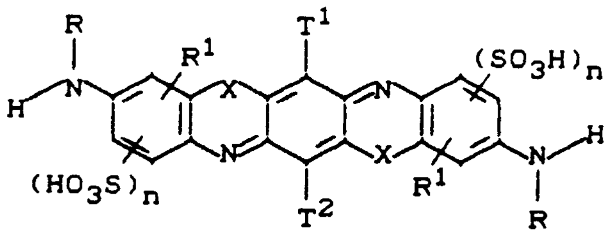

(II)

mit Phosgen oder Oxalylchlorid bzw. den Dihalogeniden aliphatisch-konjugierter, aromatisch-carbocyclischer oder aromatisch-heterocyclischer Dicarbonsäuren oder mit Cyanurchlorid im Molverhältnis 2:1 unter Abspaltung von 2 Mol Halogenwasserstoffsäure umsetzt, wobei man im Falle der Verwendung von Cyanurchlorid anschließend das dritte Chloratom durch Behandlung mit einem Überschuß H-Y-$R^2$ bei erhöhter Temperatur austauscht.

Die Umsetzung erfolgt vorzugsweise in Gegenwart äquivalenter Mengen basischer Verbindungen, vorzugsweise Alkalimetall- oder Erdalkalimetallhydroxiden, -oxiden, -carbonaten oder -hydrogencarbonaten bzw. tertiären organischen Stickstoffbasen, insbesondere aliphatischen Aminen wie Trialkanolaminen, Dialkylalkanolaminen oder Alkyl-dialkanolaminen oder aromatischer Stickstoffbasen wie Pyridin, Picolinen und Chinolin.

Geeignete basische Verbindungen sind beispielsweise Li-, Na-, K-, Mg- oder Ca-hydroxide, -oxide, -carbonate oder -hydrogencarbonate, Triethanolamin, Methyl-diethanolamin, Di-methyl-ethanolamin sowie Umsetzungsprodukte von Ammoniak mit mehr als 3 Mol Ethylenoxid oder Propylenoxid.

Farbstoffe der Formel (I) mit Z = Rest einer Diarylazo- bzw. Diarylazoxy-dicarbonsäure können auch folgendermaßen hergestellt werden:

(II) wird zunächst im Molverhältnis 1 : 1 mit einem Nitroarylcarbonsäurehalogenid acyliert und anschließend nach an sich bekannten Verfahren, z. B. mit Zucker, zusammenreduziert.

Die Ausgangsverbindungen (II), insbesondere auch die in den Beispielen angegebenen, sind bekannt (vergl. beispielsweise DE-A 21 24 080, Beispiel 1; DE-A 34 23 581, Beispiel 1 a und 1 b) bzw. lassen sich analog den dort beschriebenen Verfahren herstellen.

Geeignete Farbstoffe sind insbesondere diejenigen, die aus dem Zwischenprodukt IIa

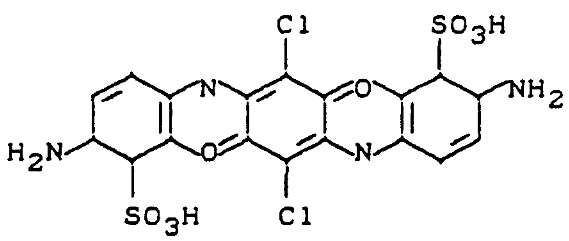

(IIa)

durch Umsetzung mit den folgenden Säurehalogeniden erhalten werden:

| Säurehalogenid | λmax der Farbstoffe I aus IIa |
|---|---|
| Cl-CO-Cl | 601 |
| Cl-CO-CH=CH-CO-Cl | 594 |
| 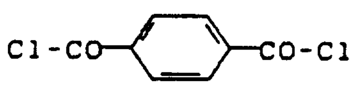 | 590 |
| 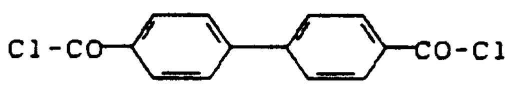 | 590 |
| 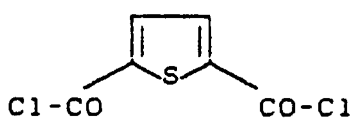 | |
| 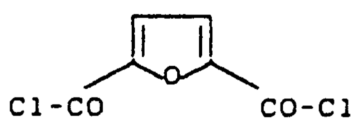 | |
| 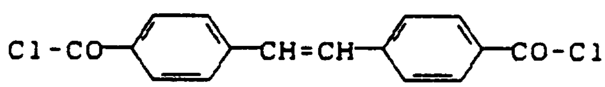 | 592 |

Insbesondere betrifft die Erfindung lichtpolarisierende Filme (Folien), die ein organisches Polymer und eine oder mehrere Verbindungen der Formel I enthalten.

Bei dem organischen Polymer handelt es sich vorzugsweise um ein transparente Filme bildendes orientiertes Polymer, das mit saure Gruppen enthaltenden Farbstoffen verträglich ist, Beispiele für solche Polymere sind: Polyamide, Cellulose(acetat), Vinylalkoholhomo- und -copolymere sowie Vinylacetathomo- und -copolymere, wobei als Monomere z.B. Ethylen, Propylen, Crotonsäure, (Meth)Acrylsäure, Maleinsäure vorliegen können. Bevorzugt eingesetzt werden Polyvinylalkohole, die durch vollständige oder teilweise Verseifung von Polyvinylacetat hergestellt worden sind, insbesondere Typen, die in 4 %iger wäßriger Lösung eine Viskosität > 4 mPa•sec, vorzugsweise 35-70 mPa.sec, bei 20 °C und einen Verseifungsgrad > 80 Mol-%, vorzugsweise 85-100 Mol-%, aufweisen.

Die Filme haben vorzugsweise eine Dicke von 10 bis 150 μ.

Die Filme enthalten vorzugsweise 0,01-10 Gew.-%, besonders bevorzugt 0,5-6 Gew.-%, bezogen auf das Filmgewicht, Farbstoff.

Die Einfärbung der Filme geschieht auf übliche Weise, z.B. durch Einfärben des (in Wasser) gelösten Polymeren. Aus der Lösung wird der Film in an sich bekannter Weise hergestellt.

Es empfiehlt sich, die Farbstoffe oder Farbstoffsalze vor ihrem Einsatz, z.B. durch Umkristallisieren, Extraktion und/oder Dialyse, von Fremdsalzen zu befreien.

Vorzugsweise werden solche Folien eingesetzt, die bei erhöhter Temperatur, vorzugsweise bei 80-160 °C, um 200-1000 % uniaxial gestreckt worden sind.

Gewünschtenfalls können die farbstoffhaltigen Filme auch einer Nachbehandlung, z.B mit wäßriger Borsäurelösung, zwecks Verbesserung der Lichtdurchlässigkeit oder das Polarisationskoeffizienten unterworfen worden. Die Bedingungen, unter denen diese Nachbehandlung durchgeführt wird, können abhängig vom Filmaterial und Farbstoff schwanken. Vorzugsweise arbeitet man mit einer 1 bis 15 gew.-%igen,

besonders bevorzugt 5 bis 10 gew.-%igen Borsäurelösung bei 30 bis 80 °C, besonders bevorzugt 50 bis 80 °C. Vorzugsweise setzt man der Borsäurelösung Tenside und gegebenenfalls anorganische Salze zu. Die Tenside können nicht-ionisch, kationisch oder anionisch sein, bevorzugt sind sie nicht-ionisch.

Beispiele für nicht-ionische Tenside sind: Additionsprodukte von Ethylenoxid an höhere Alkohole oder Additionsprodukte von Ethylenoxid an Nonylphenol. Vorzugsweise verwendet man, bezogen auf Wasser, 0,005 bis 0,5 Gew.-%, besonders bevorzugt 0,02 bis 0,2 Gew.-% Tensid. Als anorganische Salze kommen vorzugsweise Natriumsulfat und weiterhin Kaliumsulfat, Natriumchlorid, Kaliumchlorid, Natriumnitrat, Kaliumnitrat in Betracht. Bezogen auf Wasser werden vorzugsweise 0,1 bis 5 Gew.-%, besonders bevorzugt 0,3 bis 3 Gew.-%, anorganische Salze eingesetzt. Gewünschtenfalls kann noch eine Fixierungsbehandlung mit einer wäßrigen Lösung einer hochmolekularen kationischen Verbindung vorgenommen werden.

Der Dichroismus des Systems läßt sich durch Zusätze niederer mehrwertiger Alkohole wie Glykol, Glycerin, Trimethylolethan, Trimethylolpropan, Pentaerythrit, Sorbit, deren Ether wie Glykolmonomethylether, Glykolmonoethylether, Glykoldimethylether, Diglykoldiethylether, niederen Aminen wie Propylamin und Hydroxyaminen wie Propanolamin oder Amiden wie DMF, N-Methylpyrrolidon, Pyrrolidon, $\epsilon$-Caprolactam zur Gießlösung beträchtlich verstärken. Die Additive können allein oder vorteilhafter, in Mischungen eingesetzt werden, wobei als Mischungsbestandteile auch niedrige einwertige Alkohole, z.B. Methanol, Ethanol, i-Propanol auftreten können.

Die Additive werden der Gießlösung vorzugsweise in Mengen zugesetzt, die 0,5 bis 10 Gew.-%, bezogen auf die Gießlösung, ausmachen.

Zusätzlich können oberflächenaktive Verbindungen zur Steuerung von Oberflächenspannung und Viskosität zugesetzt werden. Geeignete oberflächenaktive Verbindungen sind beispielsweise Sulfonsäuren, wie Alkansulfonsäuren, insbesondere Sulfobernsteinsäure-octylester, Perfluoralkansulfonsäuren, insbesondere Perfluoroctansulfonsäure und ihr Tetraalkylammoniumsalz, z.B. ihr Tetraethylammoniumsalz, Sulfate, insbesondere sulfatierte Alkylphenolpolyglykolether oder Alkylsulfonate, amphotere Tenside, insbesondere Alkanamidopropylbetaine, wie z.B. Lauramidopropylbetain oder die in Chemical Abstracts mit den folgenden Registry Numbers aufgeführten Verbindungen: 73772-45-9, 96565-37-6, 4292-10-8, 59272-84-3, 25729-05-9, 6179-44-8, 21244-99-5, 58793-79-6, 32954-43-1, 92836-76-5, oder nichtionische Tenside wie 4-Octylphenolpolyglykolether.

Die lichtpolarisierenden Filme oder Folien können in an sich bekannter Weise mit anderen Materialien compoundiert oder laminiert werden. Als Schutzüberzug eignen sich z.B. Folien aus einem Tetrafluorethylen-Hexafluorethylen-Copolymer oder einem anderen Fluorkohlenwasserstoff-Harz, einem Polyester-, Polyolefin- oder Polyamid-Harz, einem Polycarbonat oder Celluloseester, vorzugsweise -(tri)acetat, -propionat oder -butyrat.

Außer ihrer Verwendung in lichtpolarisierenden Filmen können die Farbstoffe der Formel I allein oder in Mischungen zum Sichtbarmachen geordneter Strukturen in der Analytik von Polymeren und in biologischen Materialien eingestellt werden.

<u>Beispiel</u>

a) 0,1 g des salz- und stellmittelfreien Farbstoffs der Formel

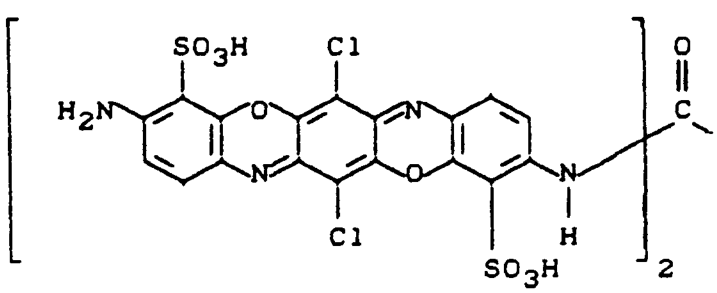

(I)

löst man bei 80 °C unter Rühren in 190 g entmineralisiertem Wasser, löst darin 9,9 g Mowiol 28-99 (verseiftes Polyvinylacetat; Verseifungsgrad 99,4 ± 0,4 Mol-%; Viskosität der 4 %igen wäßrigen Lösung bei 20 °C = 28 ± 2,0 mPa•sec; Hersteller: Hoechst AG) und versetzt dann 92,5 g dieser Lösung mit 2,5 g Glycerin und 5,0 g Methanol.

Die erhaltene Gießlösung wird mit einem Rakel auf einer reinen Glasplatte in einer 500 $\mu$ dicken Schicht aufgezogen. Nach dem Trocknen bei Raumtemperatur wird die so gewonnene Folie von der

Unterlage abgelöst, dann 15 Min. bei 130 °C temperiert und bei dieser Temperatur mit einer Geschwindigkeit von 10 cm/min auf ca. 700 % ihrer ursprünglichen Länge monoaxial verstreckt.

Die Folie zeigt im Extinktionsmaximum bei 630 nm mit polarisiertem Licht gemessen ein dichroitisches Verhältnis (QE) von 18.8 und bei 650 nm ein maximales QE von 21.1.

b) Folienherstellung auf der Gießmaschine

0,2 g des obigen salz- und stellmittelfreien Farbstoffs löst man in 100 g Wasser heiß auf. Dazu gibt man 10 g Glycerin und trägt in die erkaltete Lösung 19,8 g® MOWIOL 28-99 unter Rühren ein. Nach 1 Stunde Rühren bei Raumtemperatur erhitzt man auf 90 °C und rührt so lange bei dieser Temperatur, bis nach ca. 3 Std. eine homogene Lösung entstanden ist. Bei 50 °C rührt man dann 5 g Methanol ein. Die warme Lösung wird durch eine Filterpresse unter Aufpressen von Luft filtriert und dann im Ultraschallbad entgast. Die Gießlösung ist bei 30 °C gießfähig und haltbar.

Zur Erzeugung einer Folie wird die Gießlösung mit einem 250 µ-Rakel auf die auf ca. 50 °C vorgewärmte Gießtrommel (Trommeldurchmesser 25 cm, Umlaufgeschwindigkeit ca. 7,5 min/Umdrehung) kontinuierlich aufgetragen. Die Schicht wird durch Überleiten von erhitzter Luft getrocknet und die verfestigte Folie von der Trommel kontinuierlich abgezogen und nachgetrocknet. Die erhaltene Folie ist etwa 40 µ dick. Sie wird wie zuvor beschrieben gereckt, wobei man ähnliche Ergebnisse erhält.

c) Herstellung des Farbstoffs

110 Teile des Triphendioxazin-Farbstoffes der Formel

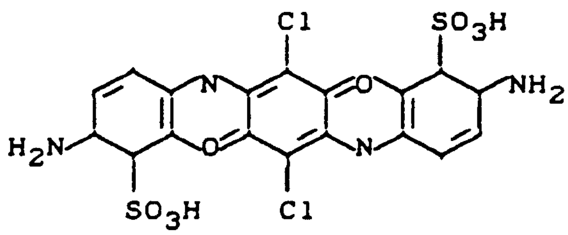

werden in ca. 4 Liter Wasser neutral gelöst. Anschließend werden im Laufe mehrerer Stunden bei Raumtemperatur unter kräftigem Rühren ca. 400 Teile Phosgen eingeleitet. Gleichzeitig wird unter Zugabe einer Lithiumhydroxid-Lösung der pH-Wert der Reaktionsmischung neutral gehalten. Um die Reaktion zu beenden ist es zweckmäßig, die Temperatur auf bis etwa 80 °C zu erhöhen.

Nach der Beendigung der Reaktion wird der nach Abkühlung auf Raumtemperatur ausgefallene Farbstoff abfiltiert und entweder durch übliche Ultrafiltration und Umkristallisieren aus Wasser salzfrei gemacht und getrocknet.

## Patentansprüche

**1.** Lichtpolarisierende Filme oder Folien enthaltend Farbstoffe, die in Form der freien Säure der Formel

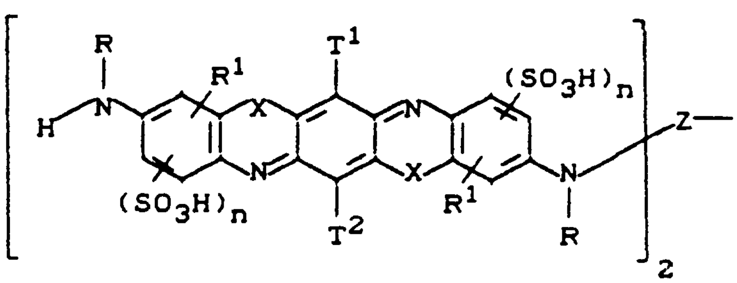

(I)

entsprechen, worin

| | | |
|---|---|---|
| R | = | H, gegebenenfalls substituiertes $C_1$-$C_4$-Alkyl, gegebenenfalls substituiertes Phenyl, |
| $R^1$ | = | H, Substituent |
| $T^1$, $T^2$ | = | H, Cl, Br, gegebenenfalls substituiertes $C_1$-$C_4$-Alkyl, $C_1$-$C_4$-Alkoxy, Phenyl, Phenoxy |
| n | = | 1, 2 |

Z = Brückenglied
X = Sauerstoff- oder Schwefel
bedeuten.

2. Filme und Folien gemäß Anspruch 1 enthaltend Farbstoffe des Anspruchs 1 mit X = O; R, $R^1$ = H; $T^1$, $T^2$ = Cl; n = 1 und Z = Brückenglied.

3. Filme und Folien gemäß Anspruch 2 enthaltend Farbstoffe der Ansprüche 1-2 mit Z = CO.

## Claims

1. Light-polarizing films or sheets containing dyestuffs which, in the form of the free acid, have the formula

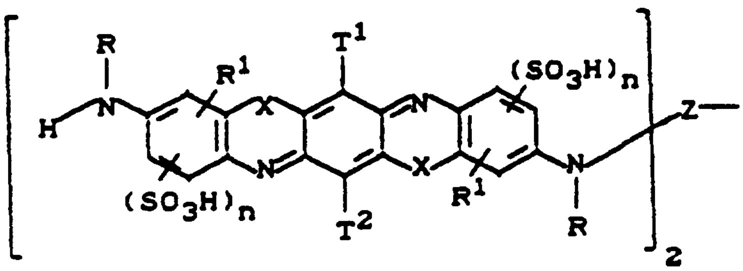

(I)

in which

| | |
|---|---|
| R | denotes H, substituted or unsubstituted $C_1$-$C_4$-alkyl, substituted or unsubstituted phenyl, |
| $R^1$ | denotes H or a substituent, |
| $T_1$, $T_2$ | denote H, Cl, Br, substituted or unsubstituted $C_1$-$C_4$-alkyl, $C_1$-$C_4$-alkoxy, phenyl or phenoxy, |
| n | denotes 1 or 2, |
| Z | denotes a bridging member, |
| X | denotes oxygen or sulphur. |

2. Films and sheets according to Claim 1, containing dyestuffs of Claim 1 where X denotes O; R, $R^1$ denote H; $T^1$, $T^2$ denote Cl; n denotes 1 and Z denotes a bridging member.

3. Films and sheets according to Claim 2, containing dyestuffs of Claims 1-2 where Z denotes CO.

## Revendications

1. Pellicules ou feuilles polarisant la lumière, contenant des colorants qui, à l'état d'acides libres, répondent à la formule

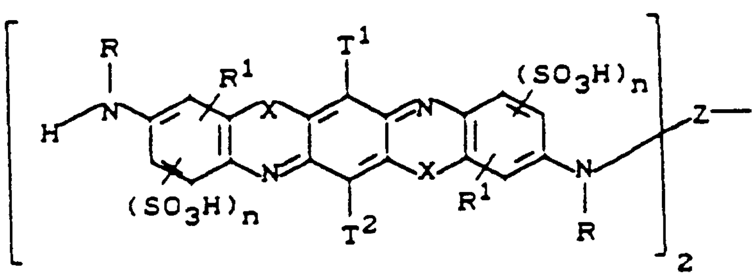

(I)

dans laquelle

| | |
|---|---|
| R | = H, alkyle en $C_1$-$C_4$ éventuellement substitué, phényle éventuellement substitué, |
| $R^1$ | = H, substituant, |
| $T^1$, $T^2$ | = H, Cl, Br, alkyle en $C_1$-$C_4$, alcoxy en $C_1$-$C_4$, phényle, phénoxy éventuellement |

substitué,

n = 1, 2

Z = pont

X = oxygène ou soufre.

**2.** Pellicules et feuilles selon la revendication 1, contenant des colorants selon la revendication 1 pour lesquels :

X = O ; R, $R^1$ = H, $T^1$, $T^2$ = Cl ; n = 1 et Z = pont.

**3.** Pellicules et feuilles selon la revendication 2, contenant des colorants des revendications 1 et 2 pour lesquels Z = CO.